(19) Europäisches Patentamt
European Patent Office
Office européen des brevets

(11) **EP 2 627 982 B1**

(12) **FASCICULE DE BREVET EUROPEEN**

(45) Date de publication et mention
de la délivrance du brevet:
**03.04.2019 Bulletin 2019/14**

(21) Numéro de dépôt: **11779767.0**

(22) Date de dépôt: **30.09.2011**

(51) Int Cl.:
**G01M 15/02** *(2006.01)*    **G01M 15/05** *(2006.01)*

(86) Numéro de dépôt international:
**PCT/FR2011/052284**

(87) Numéro de publication internationale:
**WO 2012/049396 (19.04.2012 Gazette 2012/16)**

(54) **SYSTÈME DE SURVEILLANCE D'UN BANC D'ESSAI DE MOTEUR D'AERONEF**

SYSTEM ZUR ÜBERWACHUNG EINES FLUGZEUGMOTORTESTBETTES

SYSTEM FOR MONITORING AN AIRPLANE ENGINE TEST BED

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **11.10.2010 FR 1058236**

(43) Date de publication de la demande:
**21.08.2013 Bulletin 2013/34**

(73) Titulaire: **Safran Aircraft Engines
75015 Paris (FR)**

(72) Inventeurs:
• **GEREZ, Valerio
F-77550 Moissy-Craymayal Cedex (FR)**
• **LACAILLE, Jérôme, Henri, Noël
F-77550 Moissy-Cramayel Cedex (FR)**

(74) Mandataire: **Ilgart, Jean-Christophe et al
BREVALEX
95, rue d'Amsterdam
75378 Paris Cedex 8 (FR)**

(56) Documents cités:
**EP-A1- 1 195 593        EP-A1- 1 281 948
EP-A2- 1 715 165        US-A- 4 821 217
US-A1- 2010 063 674     US-B1- 7 403 850**

EP 2 627 982 B1

Description

## DOMAINE TECHNIQUE

La présente invention concerne le domaine des systèmes de surveillance d'un banc d'essai d'un moteur. L'enseignement de la présente invention se réfère à un moteur d'aéronef.

## ÉTAT DE LA TECHNIQUE ANTÉRIEURE

Les moteurs utilisent des technologies très sophistiquées et sont systématiquement testés sur des bancs d'essai. Lors d'un test sur un banc d'essai, le moteur ou des composants du moteur ainsi que le banc sont surveillés en utilisant un grand nombre de capteurs. Certains tests en phase de développement du moteur peuvent nécessiter l'enregistrement de plus d'un millier de mesures comprenant des mesures de performance à basse fréquence allant jusqu'à 100Hz (par exemple, pressions, températures, jauges, etc.), mesures dynamiques à haute fréquence jusqu'à 50kHz (par exemple, des mesures issues d'accéléromètres, microphones, etc.), ainsi que quelques mesures ou données décrivant la procédure du test.

Actuellement, il existe un système de contrôle appelé MSP « Maîtrise Statistique des Procédés » (SPC Statistic Process Control, en anglais) capable d'enregistrer les mesures de chaque capteur (à des fréquences d'acquisitions différentes) et de présenter en temps réel des graphes de mesures avec des bornes d'alerte ou de sécurité.

Toutefois, ce système de contrôle MSP se contente de recueillir les mesures surveillées et de vérifier qu'elles restent entre deux bornes de sécurité. Ne prenant pas en compte les variations de contexte des mesures, les bornes de sécurité du système de contrôle MSP doivent nécessairement être très larges. Ainsi, il est très difficile pour un tel système de détecter une anomalie de fonctionnement et il se contente de protéger le banc d'essai en déclenchant des alertes en cas de panne très grave.

Cependant, les opérateurs du banc d'essai essayent en général de tester le moteur dans des conditions de fonctionnement extrêmes. Ceci peut présenter des problèmes de sécurité et des risques sérieux d'endommagement du banc qui est très coûteux, ce qui peut entraîner des retards de développement du moteur.

Le document US4821217 décrit une station de test programmable pour des moteurs d'aéronef pour automatiquement effectuer des tests en statique des systèmes électriques et pneumatiques du moteur.

Le document EP1195593 décrit un banc d'essais pour moteur d'aéronef qui permet de simuler les conditions réelles d'utilisation du moteur.

L'objet de la présente invention est de proposer un système de surveillance d'un banc d'essai capable de surveiller avec précision et en toute sécurité le fonctionnement du banc d'essai et du moteur ou d'un composant du moteur en essai.

## EXPOSÉ DE L'INVENTION

La présente invention est définie par un système de surveillance d'un banc d'essai d'au moins un composant d'un moteur d'aéronef selon la revendication 1 et comportant :

- des moyens d'acquisition pour acquérir à des instants successifs des paquets de signaux temporels correspondants à des mesures de paramètres endogènes et exogènes spécifiques à l'ensemble banc d'essai et composant moteur,
- des moyens de traitement pour construire à chaque instant desdits instants successifs et à partir des paquets de signaux temporels antérieurs audit instant un vecteur indicateur endogène et un vecteur indicateur exogène associés, lesdits vecteurs indicateurs endogène et exogène étant utilisées pour automatiquement identifier les contextes et pour détecter des anomalies en fonction du contexte,
- des moyens de traitement pour identifier de manière automatique et non supervisée une classe de contexte pour ledit vecteur indicateur exogène, et
- des moyens de traitement pour calculer en utilisant au moins un détecteur d'anomalie une probabilité de risque dudit vecteur indicateur endogène conditionnée par ladite classe de contexte identifiée pour ledit vecteur indicateur exogène associé afin de diagnostiquer l'état dudit ensemble banc d'essai et composant moteur.

Ainsi, ce système de surveillance est un système auto-adaptatif qui permet de gérer un environnement changeant et multi-contextuel. En effet, le système s'adapte à des configurations changeantes en détectant automatiquement les changements de contextes permettant ainsi au détecteur d'anomalie de faire un diagnostic local des mesures à surveiller en fonction du contexte identifié.

De plus, l'utilisation d'un détecteur d'anomalie sur un banc d'essai permet de le valider avant son utilisation sur par exemple un moteur embarqué.

Avantageusement, le système de surveillance comporte :

- des moyens de traitement pour construire lors d'une phase d'apprentissage un ensemble de classes de contextes à partir d'une suite de vecteurs indicateurs exogènes initiaux, et
- des moyens de traitement pour mettre à jour lors d'une phase d'exécution ledit ensemble de classes de contextes à partir de nouvelles entrées de vecteurs indicateurs exogènes.

Ainsi à partir des données de contexte, le système apprend à faire un classement automatique et non supervisée des contextes permettant d'identifier les différents modes opératoires de l'ensemble banc d'essai et composant moteur. Ceci permet au système de surveillance de gérer toutes les manoeuvres aléatoires que l'on fait subir au moteur en essai ou à un composant moteur en essai.

Avantageusement, les moyens de traitement sont configurés pour mettre à jour ledit ensemble de classes de contextes en vérifiant si une nouvelle détection d'un vecteur indicateur exogène appartient à une classe de contexte déjà construite, et en enregistrant le vecteur indicateur exogène de la nouvelle détection dans une base de données si aucune classe de contexte ne correspond à la nouvelle détection jusqu'à ce qu'un nombre adapté de vecteurs indicateurs exogènes similaires soient détectés pour former une nouvelle classe de contexte.

Ainsi, le système réapprend constamment à améliorer le classement non supervisé des contextes pour atteindre au bout d'un certain temps une classification stable et assez robuste.

En outre, les moyens de traitement sont configurés pour mettre à jour ledit ensemble de classes de contextes en vérifiant si des nouvelles détections de vecteurs indicateurs exogènes appartiennent à des classes de contexte déjà construites et en enregistrant au moins une partie desdites nouvelles détections dans les classes de contexte correspondantes.

Ceci permet, par exemple de manière régulière, de réaliser une mise à jour supplémentaire de chaque classe pour tenir compte d'une évolution lente des modes opératoires permettant d'améliorer davantage la surveillance de l'ensemble banc d'essai et le composant moteur.

Avantageusement, les moyens de traitement sont configurés pour identifier la classe de contexte d'un vecteur indicateur exogène en calculant une valeur d'adéquation dudit vecteur indicateur exogène par rapport à chacune des classes de contextes.

La valeur d'adéquation permet de vérifier si des nouvelles détections de vecteurs indicateurs exogènes ressemblent à des vecteurs qui ont déjà servi à l'apprentissage. Ainsi, la valeur d'adéquation est une indication crédible et quantifiable de l'appartenance d'un vecteur indicateur exogène à une classe de contexte et dont la fiabilité augmente rapidement avec le temps. En conséquence, lorsque la valeur d'adéquation devient assez élevée, le système de surveillance peut commencer à réaliser des diagnostics précis et pertinents.

Selon un aspect de la présente invention, les moyens de traitement sont configurés pour construire ledit ensemble de classes de contextes en utilisant un critère de maximisation de vraisemblance.

Ce critère itératif permet d'aboutir assez rapidement à une classification contextuelle précise.

Selon un autre aspect de la présente invention, les moyens de traitement sont configurés pour sélectionner un nombre adapté de classes de contextes selon un critère d'optimisation appliqué sur les vecteurs indicateurs exogènes.

Ceci permet de déterminer le meilleur nombre de classes pour aboutir à une classification optimale des modes opératoires.

Avantageusement, le système de surveillance comporte :

- des mémoires tampons pour buffériser pour chacun des paramètres endogènes ou exogènes au moins un paquet de signaux temporels antérieurs audit instant,
- des moyens de traitements pour lisser chacun desdits paquets de signaux temporels selon au moins une échelle pour former des courbes représentatives desdits paquets,
- des moyens de traitements pour ré-échantillonner lesdites courbes représentatives, et
- des moyens de traitements pour comprimer lesdites courbes ré-échantillonnées permettant de construire ledit vecteur indicateur endogène ou exogène.

Ceci permet de transformer de manière fiable les flux de données issues de l'ensemble banc d'essai et composant moteur en vecteurs indicateurs qui tiennent compte des variations locales et globales des mesures, et permet ainsi de réaliser une classification non supervisée, adaptative, et précise des modes opératoires.

Avantageusement, les moyens de traitements sont configurés pour calculer une valeur de qualité de ladite probabilité de risque.

Ceci permet d'évaluer de manière quantifiable la pertinence de la probabilité de risque.

Selon un premier exemple, le détecteur d'anomalie implémente un modèle de comportement usuel et réalise une mesure (score) de normalité par un calcul de vraisemblance.

Ceci permet de détecter les fonctionnements anormaux du banc d'essai et du moteur.

Selon un deuxième exemple, le détecteur d'anomalie implémente un modèle de détection d'endommagement de roulements.

Ce deuxième détecteur peut travailler en temps différé pour produire, par exemple régulièrement, un diagnostic sur l'usure et l'endommagement des roulements du banc d'essai et du moteur.

Selon un troisième exemple, le détecteur d'anomalie implémente un modèle de détection d'événements fugaces.

Ce troisième détecteur permet de détecter l'apparition d'événements vibratoires fugaces dans le banc d'essai et le moteur.

Avantageusement, le système de surveillance comporte des moyens de supervision dans lesquels sont encapsulés lesdits détecteurs d'anomalie, lesdits moyens de supervision étant configurés pour lancer lesdits détecteurs d'anomalie, pour procurer des données d'entrée pour chacun desdits détecteurs d'anomalie, pour recevoir des messages de sortie de chacun desdits détecteurs d'anomalie, et pour gérer des instances correspondant à des choix de paramétrage et de calibrage de chacun desdits détecteurs d'anomalie.

Ceci permet une gestion simple et efficace des différents détecteurs d'anomalies ainsi que des différents moteurs ou composants des moteurs qui peuvent être installés à des moments différents dans le banc d'essai.

L'invention vise également un système de gestion comportant un système de contrôle connecté à un banc d'essai d'un moteur, le système de contrôle étant configuré pour contrôler le banc d'essai et pour enregistrer des données issues du banc d'essai et d'au moins un composant d'un moteur dans des moyens de stockage, le système de gestion comportant en outre un système de surveillance selon l'une quelconque des caractéristiques précédentes, ledit système de surveillance étant connecté au banc d'essai par l'intermédiaire du système de contrôle qui lui transmet lesdites données issues de l'ensemble banc d'essai et composant moteur.

Ceci permet de ne pas perturber le fonctionnement du banc d'essai. Par exemple, le système de contrôle peut être déployé dans un premier ordinateur et le système de surveillance dans un second ordinateur déporté par rapport au premier.

L'invention vise aussi un procédé de surveillance d'un banc d'essai d'au moins un composant d'un moteur d'aéronef selon la revendication 15 et comportant les étapes suivantes :

- acquérir à des instants successifs des paquets de signaux temporels correspondants à des mesures de paramètres endogènes et exogènes spécifiques à l'ensemble banc d'essai et composant moteur,
- construire à chaque instant desdits instants successifs et à partir des paquets de signaux temporels antérieurs audit instant un vecteur indicateur endogène et un vecteur indicateur exogène associés, lesdits vecteurs indicateurs endogène et exogène étant utilisés pour automatiquement identifier les contextes et pour détecter des anomalies en fonction du contexte,
- identifier de manière automatique et non supervisée une classe de contexte pour ledit vecteur indicateur exogène, et
- calculer en utilisant au moins un détecteur d'anomalie une probabilité de risque dudit vecteur indicateur endogène conditionnée par ladite classe de contexte identifiée pour ledit vecteur indicateur exogène associé afin de diagnostiquer l'état dudit ensemble banc d'essai et composant moteur.

L'invention vise également un programme d'ordinateur comportant des instructions de code pour la mise en oeuvre du procédé selon la revendication 15 lorsqu'il est exécuté par ordinateur.

**BRÈVE DESCRIPTION DES DESSINS**

La Fig. 1 illustre de manière schématique un système de surveillance d'un banc d'essai d'au moins un composant d'un moteur, selon l'invention ;

La Fig. 2 est un organigramme selon un mode de réalisation particulier de l'invention illustrant les étapes de construction d'un vecteur indicateur endogène et d'un vecteur indicateur exogène associé ;

La Fig. 3 est un organigramme selon un mode de réalisation particulier de l'invention illustrant les étapes de construction d'un ensemble de classes de contextes ;

La Fig. 4 est un organigramme illustrant les étapes pour sélectionner un nombre optimal de classes de contexte, selon l'invention ;

La Fig. 5 est un organigramme illustrant un exemple d'encapsulation de détecteurs d'anomalies dans le système de surveillance, selon l'invention ;

La Fig. 6 illustre de manière schématique l'encapsulation de détecteurs d'anomalies dans le système de surveillance, selon l'invention ; et

La Fig. 7 illustre de manière schématique un système de gestion du banc d'essai d'un composant moteur, selon l'invention.

## EXPOSÉ DÉTAILLÉ DE MODES DE RÉALISATION PARTICULIERS

L'idée à la base de l'invention est de proposer un système de surveillance d'un banc d'essai en utilisant des mécanismes de surveillance destinés pour les moteurs d'aéronef embarqués. Ces mécanismes de surveillances (embarqués) sont configurés pour détecter des anomalies en connaissant à l'avance les modes de fonctionnement du moteur.

On notera qu'un moteur embarqué fonctionne toujours de la même façon selon des phases de vol bien définies comportant les phases suivantes : démarrage moteur, taxi, décollage, montée, croisière, approche, atterrissage, reverse, et arrêt moteur. Ainsi, on peut facilement identifier les modes de fonctionnent du moteur par des indicateurs assez simples selon des critères élémentaires tels que le régime moteur, l'altitude, et les attitudes de l'aéronef.

Toutefois, le fonctionnement d'une machine (c'est-à-dire, d'un composant du moteur ou du moteur en entier) sur un banc d'essai peut être très aléatoire. Par souci de brièveté, on utilisera dans la suite l'expression « composant moteur » pour désigner le moteur tout entier ou seulement un composant du moteur.

Les manoeuvres que l'on fait subir à un composant moteur installé dans un banc d'essai sont très changeantes, imprévisibles et peuvent comporter des conditions extrêmes. De plus, on est souvent amené à tester de nouveaux matériels. Ainsi, il n'est pas possible de prévoir ou de classifier à l'avance les modes de fonctionnement du banc d'essai et du composant moteur et par conséquent, les mécanismes habituels de surveillance des moteurs d'aéronef embarqués ne peuvent pas fonctionner dans un tel environnement.

Un but de la présente invention est donc de réaliser une classification non supervisée et une identification automatique des contextes dans un environnement composé d'un banc d'essai et d'un composant moteur.

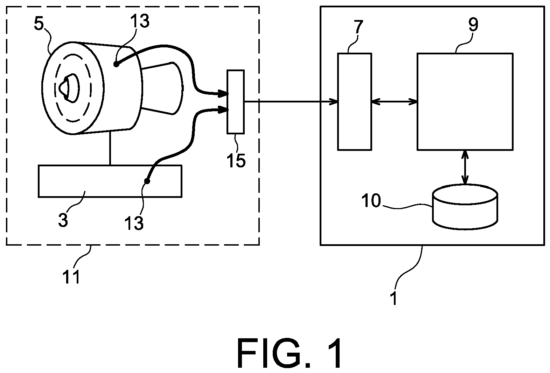

La Fig. 1 illustre de manière schématique un système de surveillance 1 d'un banc d'essai 3 d'au moins un composant 5 d'un moteur d'aéronef, selon l'invention. Ce système 1 comporte des moyens d'acquisition 7 de données et des moyens de traitement 9 de l'information tel un calculateur ou ordinateur pour l'exécution d'un ou de plusieurs programmes d'ordinateur comprenant des instructions de code de programme, stockés dans des moyens de stockage 10 de l'ordinateur et conçus pour mettre en oeuvre le système de surveillance de l'ensemble 11 banc d'essai 3 et composant moteur 5.

Le composant moteur 5 est monté dans le banc d'essai 3 et un grand nombre de capteurs 13 (quelques centaines) sont utilisés pour acquérir des mesures sur le banc d'essai 3 et sur le composant moteur 5. Ces mesures sont récupérées sous forme de canaux numériques par des bus ou voies d'acquisitions 15 à des fréquences constantes et sont transmises au système de surveillance 1. Certaines mesures (par exemple, des mesures de vibration) sont enregistrées à haute fréquence (de l'ordre de 50kHz) tandis que d'autres mesures (par exemple, des mesures de pression) sont enregistrées à basse fréquence (environ 1Hz à 100Hz).

Étant donné que le nombre de mesures prélevées sur l'ensemble 11 banc d'essai 3 et composant moteur 5 peut être très élevé (plusieurs centaines), il est avantageux de ne pas traiter toutes les mesures simultanément. Ainsi, on peut subdiviser l'ensemble de mesures en sous-ensembles de mesures relatifs à différents éléments de l'ensemble 11 banc d'essai 3 et composant moteur 5 suivant des critères établis par expertise.

Par exemple, un élément important à surveiller est la ligne d'arbre qui correspond à un couplage mécanique entre le banc d'essai 13 et le moteur 5 sachant que ce dernier est entraîné en rotation par un arbre qui est tourné par le banc 3. Ainsi, selon cet exemple, on sélectionne le sous-ensemble de mesures relatif à la ligne d'arbre qui peut comporter des mesures à basse fréquence (par exemple, vitesses de rotation, pressions, températures, etc.) ainsi que des mesures à haute fréquence (par exemple, accélérations, déplacements).

Par ailleurs, on notera que les mesures comportent des mesures de paramètres endogènes et exogènes. Un paramètre exogène est un paramètre contextuel qui est représentatif du contexte (c'est-à-dire, mode opératoire ou conditions de fonctionnement) de l'ensemble 11 banc d'essai 3 et composant moteur 5. Par contre, un paramètre endogène est un paramètre observable à suivre et à analyser selon son contexte d'observation pour détecter une éventuelle anomalie. L'identification d'un paramètre endogène ou exogène peut être réalisée suivant des critères établis par expertise.

Selon l'exemple de la ligne d'arbre, les mesures de paramètres exogènes comportent les vitesses de rotation, les pressions d'air en entrée, les températures, etc. En revanche, les mesures de paramètres endogènes comportent les mesures de vibrations, les énergies, les déplacements de l'arbre, les balourds, etc. Bien entendu, une information sur l'énergie ou le balourd n'est pas du tout la même d'un contexte à un autre.

Conformément à l'invention, le système de surveillance 1 est configuré pour transformer les flux de données de mesures de paramètres en provenance de l'ensemble 11 banc d'essai 3 et composant moteur 5 en indicateurs pour identifier les contextes de manière automatique et pour détecter des anomalies en fonction du contexte.

Plus particulièrement, les moyens d'acquisition 7 sont configurés pour acquérir à des instants successifs (par exemple, à des instants réguliers) des paquets de signaux temporels correspondants aux mesures de paramètres endogènes et exogènes spécifiques à l'ensemble 11 banc d'essai 3 et composant moteur 5.

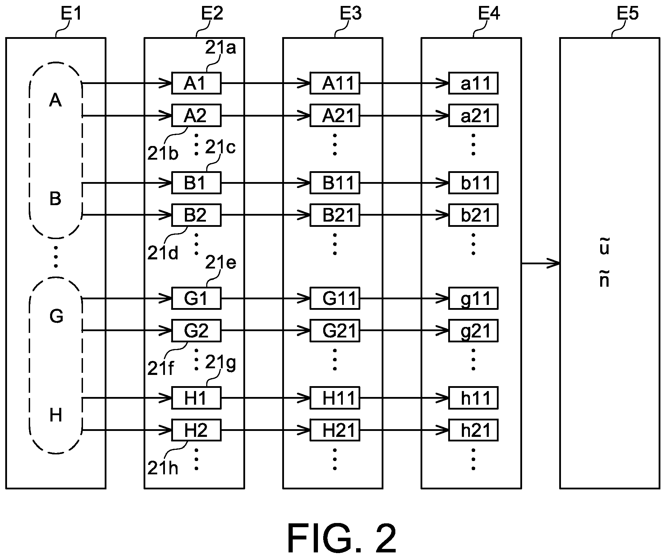

A chaque instant courant parmi les instants successifs, les moyens de traitement 9 sont configurés pour construire un vecteur indicateur endogène et un vecteur indicateur exogène associé à partir des paquets de signaux temporels antérieurs à l'instant courant. La construction d'un vecteur indicateur endogène ou exogène peut être réalisée en comprimant les paquets de signaux temporels, comme exposé plus loin en référence à la Fig. 2. Ainsi, chaque vecteur indicateur (endogène ou exogène) peut être calculé par exemple, de manière périodique, à partir des données du passé.

En outre, les moyens de traitement 9 sont configurés pour identifier de manière automatique et non supervisée une classe de contexte pour le vecteur indicateur exogène construit à l'instant courant.

L'identification d'une classe de contexte peut être réalisée de manière automatique par exemple, en calculant les distances d'un vecteur indicateur exogène à l'instant courant par rapport aux vecteurs indicateurs exogènes construits à des instants antérieurs et en définissant la classe par un nombre déterminé de vecteurs exogènes les plus proches.

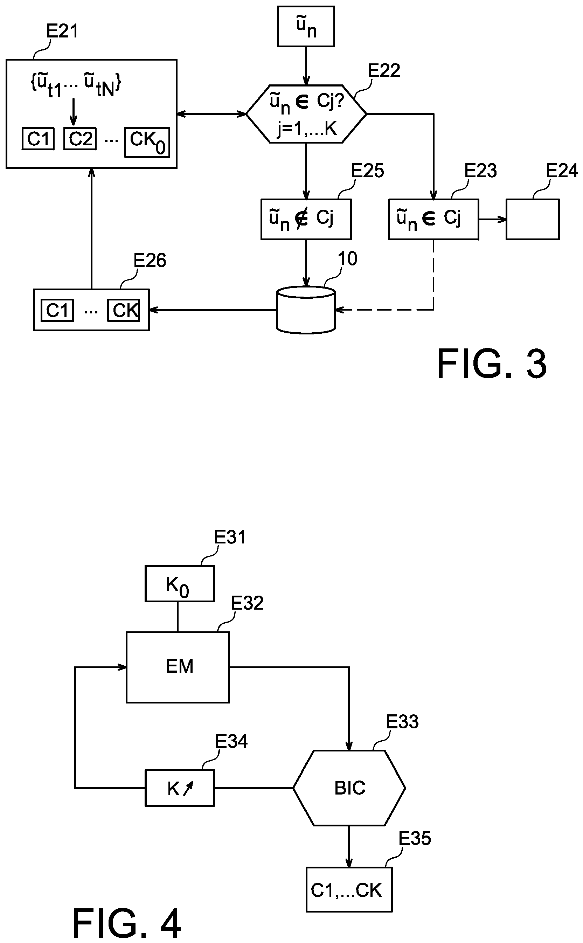

En variante, l'identification d'une classe de contexte peut aussi être réalisée de manière automatique et non supervisée mais en analysant l'appartenance du vecteur indicateur exogène courant à une classe parmi un ensemble de classes construit par apprentissage, comme exposé plus loin en référence à la Fig. 3.

Ainsi, les moyens de traitement 9 peuvent utiliser au moins un détecteur d'anomalie (destiné par exemple à un moteur d'aéronef embarqué) pour calculer un score ou une probabilité de risque du vecteur indicateur endogène courant conditionnée par la classe de contexte identifiée pour le vecteur indicateur exogène associé afin de diagnostiquer l'état de l'ensemble 11 banc d'essai 3 et composant moteur 5.

Avantageusement, les moyens de traitements 9 sont configurés aussi pour calculer une valeur de qualité ou de précision de la probabilité de risque qui permet d'évaluer la pertinence du risque.

La Fig. 2 est un organigramme selon un mode de réalisation particulier illustrant les étapes de construction d'un vecteur indicateur endogène et d'un vecteur indicateur exogène associé.

A l'étape E1, les moyens de traitement 9 analysent les paquets de signaux temporels correspondants aux mesures de paramètres A, B, ..., G, H reçus à des instants successifs et identifient les mesures de paramètres endogènes A, B, etc. et exogènes G, H, etc. Les mesures de paramètres endogènes sont utilisées pour construire des vecteurs indicateurs endogènes et les mesures de paramètres exogènes sont utilisées pour construire des vecteurs indicateurs exogènes. Par souci de brièveté, le terme « paramètre » est utilisé dans la suite pour désigner indifféremment un « paramètre endogène » ou un « paramètre exogène » et de même, le terme « vecteur indicateur » est utilisé pour désigner indifféremment un « vecteur indicateur endogène » ou un « vecteur indicateur exogène ».

A l'étape E2, les paquets de signaux temporels des différentes mesures de paramètres sont enregistrés dans des mémoires tampons 21a-21h à des fréquences déterminées. Plus particulièrement, les moyens de traitement 9 sont configurés pour buffériser pour chacun des paramètres, au moins un paquet de signaux temporels antérieurs à l'instant courant dans des mémoires tampons 21 de tailles variables.

Ainsi, pour chacun des paramètres A, B, ..., G, H, on définit au moins un intervalle temporel pour enregistrer le signal temporel correspondant. Par exemple, pour le paramètre A, on peut enregistrer le signal temporel correspondant pendant les dix dernières secondes dans une première mémoire tampon 21a et pendant les vingt dernières secondes dans une deuxième mémoire tampon 21b, etc. Autrement dit, pour chaque paramètre, on peut définir plusieurs mémoires tampons de différents et/ou de mêmes tailles.

Selon l'exemple illustré sur la Fig. 2, un premier signal temporel A1 et un deuxième signal temporel A2 du paramètre A sont enregistrés dans des première et deuxième mémoires tampon 21a, 21b, etc. De même, des signaux temporels B1, B2, ..., G1, G2, H1, H2 des paramètres B,...,G, H respectivement sont enregistrés dans les mémoires tampons 21c, 21d,...,21h. Autrement dit, pour chaque paramètre, plusieurs paquets de signaux correspondants peuvent être bufférisés dans plusieurs mémoires tampons 21a-21h.

A l'étape E3, les moyens de traitements 9 sont configurés pour lisser chacun des paquets de signaux temporels selon au moins une échelle pour former des courbes représentatives A11, A21, ..., H11, H12 de ces paquets. Le lissage est une opération de convolution qui permet de créer une représentation globale ou locale du paquet de signaux temporels selon l'échelle choisie. Un fort lissage illustre l'évolution ou la tendance globale des signaux, tandis qu'un faible lissage détermine le comportement local des signaux.

A l'étape E4, les moyens de traitements sont configurés pour ré-échantillonner les courbes représentatives A11, A21, ..., H11, H12 formées à l'étape précédente. En effet, une fois qu'on a une courbe lissée, on peut se contenter de quelques points représentatifs, ce qui correspond à une première compression. Ainsi, au bout de cette étape, les paquets de signaux temporels de chacun des paramètre A,...H sont transformés en une suite de courbes ré-échantillonnées a11, a21,..., h21 qui sont de petites courbes de quelques points (par exemple, de l'ordre d'une dizaine de points).

Plus précisément, les étapes précédentes E2 à E4 consistent à définir pour un paquet de signaux temporels $x_t$ (c'est-à-dire, A1, ou A2, ... ou H2) à un instant courant $t$ d'un paramètre donnée (A, ou B,..., ou H), la taille $n$ d'un mémoire tampon (21a,...21h), le taux $r$ d'un ré-échantillonnage, et le rang $p$ d'un filtre polynomial moyen $a=[a_0, a_1,...,a_p]$. La courbe ré-échantillonnée $Y_t$ (c'est-à-dire, a11, ou a21, ..., ou h21) à l'issue de ces étapes est définie alors par $Y_t = [y_t, y_{t-r},...,y_{t-(n-1)r}]$ où $y_t$ est la convolution de $x_t$ par le filtre $a$ selon la formule suivante :

$$y_t = a * x = \sum_{i=0}^{p-1} a_i x_{t-i} \ .$$

A l'étape E5, les moyens de traitements 9 sont configurés pour comprimer les courbes ré-échantillonnées a11, a21,.., h21 afin de construire le vecteur indicateur endogène ou exogène. La compression est réalisée individuellement pour chaque courbe ré-échantillonnée $Y_t$ (c'est-à-dire, pour chacune des petites courbes a11, a21,..., h21).

A titre d'exemple, on peut comprimer chaque courbe ré-échantillonnée $Y_t$ en utilisant une analyse en composante principale. Une première étape consiste à déterminer une courbe normalisée $\overline{Y}_t=(Y_t-\mu_t)/\sigma_t$ en calculant la moyenne $\mu_t$ et la variance $\sigma_t$ de tous les n points de la courbe ré-échantillonnée $Y_t$. Ensuite, on fait un changement de base en projetant chaque courbe normalisée $\overline{Y}_t$ sur une base orthonormale de courbes-modèles (ou curve-templates) $\{v_1,v_2,...,v_n\}$, chaque courbe-modèle $v_i$ étant un vecteur de base de taille n.

Chaque courbe ré-échantillonnée $Y_t$ peut alors être exprimée par une série de courbes-modèles de la manière suivante :

$$y_t = \sum_{i=1}^{k} \alpha_{t,i} v_i + \varepsilon_t \ .$$

Dans cette équation, les $\alpha_{t,1}\alpha_{t,2},..,\alpha_{t,k}$ sont les coefficients de projection de la courbe normalisée $\overline{Y}_t$ sur la base orthonormale et $\varepsilon_t$ est l'erreur de résidu de la compression quand seulement les $k$ premières courbes-modèles $v_1$ à $v_k$ ($k \geq 0$) sont utilisés. En effet, l'analyse en composante principale permet de classer les courbes-modèles par ordre d'importance et d'éliminer celles qui ne sont pas importantes ou plus précisément de regrouper celles présentant une très faible variance dans le résidu $\varepsilon_t$. Ceci permet d'obtenir l'ensemble optimal de courbe-modèle $v_i$ de taille $k$ qui minimise la norme du résidu $\|\varepsilon_t\|$.

La courbe ré-échantillonnée $Y_t$ peut alors être comprimée en remplaçant ces éléments $y_t, y_{t-r},...,y_{t-(n-1)r}$ par une moyenne $\mu_t$, une variance $\sigma_t$, et quelques coefficients de compression $\alpha_{t,1}, \alpha_{t,2},...,\alpha_{t,k}$ qu'on peut représenter par un vecteur de compression $\tilde{y}=[\mu_t, \sigma_t, \alpha_{t,1},...,\alpha_{t,k}]$.

La concaténation de tous les vecteurs de compression $\tilde{y}_1, \tilde{y}_2,...$ de toutes les courbes ré-échantillonnées a11, a21,..., h12 forme de manière globale un vecteur indicateur $\tilde{w}=[\tilde{y}_1, \tilde{y}_2,...]$. Dans la suite, un vecteur indicateur endogène est noté $\tilde{x}$ et un vecteur indicateur exogène est noté $\tilde{u}$. Le vecteur indicateur endogène $\tilde{x}$ permet alors de réaliser un diagnostic dans le cadre de la classe de contexte identifié par le vecteur indicateur exogène $\tilde{u}$.

La Fig. 3 est un organigramme selon un mode de réalisation particulier illustrant les étapes de construction d'un ensemble de classes de contextes.

Lors d'une phase de calibration (étape E21), les moyens de traitement 9 sont configurés pour construire un ensemble initial de classes de contextes C1, C2, ..., $CK_0$ à partir d'une suite d'apprentissage de vecteurs indicateurs exogènes initiaux $\{\tilde{u}_{t1}, \tilde{u}_{t2},..., \tilde{u}_{tN}\}$. Cette construction est réalisée de manière non supervisée, c'est-à-dire, sans aucune connaissance à l'avance de noms des classes.

Ensuite, lors d'une phase d'exécution (étapes E22-E26), les moyens de traitement 9 sont configurés pour mettre à jour cet ensemble de classes de contextes de manière auto-adaptative à partir de nouvelles entrées de vecteurs indicateurs exogènes.

Plus particulièrement, à l'étape E22 les moyens de traitement 9 sont configurés pour vérifier l'appartenance d'une nouvelle détection d'un vecteur indicateur exogène $\tilde{u}_n$ à une classe de contexte déjà construite. Cette vérification est réalisée par exemple, en calculant une valeur d'adéquation du vecteur indicateur exogène $\tilde{u}_n$ par rapport à chacune des classes de contextes et en identifiant la classe qui présente la meilleure adéquation. La notion d'adéquation est décrit dans la publication de J. Lacaille « Validation of health monitoring algorithms for civil aircraft engines, IEEE Aerospace Conference, Big Sky, MT, 2010 ». La valeur d'adéquation peut être considérée comme la mesure d'une distance entre le vecteur indicateur exogène et une classe de contexte, et permet ainsi de vérifier si le vecteur indicateur exogène de la nouvelle détection ressemble à des vecteurs qui ont déjà servi à l'apprentissage. Si le test à l'étape E22 est positif, on va à l'étape E23, sinon on va à l'étape E25.

L'étape E23 concerne l'identification de la classe de contexte. En effet, si le vecteur indicateur exogène $\tilde{u}_n$ de la nouvelle détection appartient à une classe de contexte déjà construite, alors cette appartenance identifie la classe de contexte et permet de faire des diagnostics à l'étape E24 en utilisant un détecteur d'anomalie. Avantageusement, on enregistre au moins une partie de ces nouvelles détections de vecteurs indicateurs exogènes dans la base de données 10 pour les enregistrer ensuite dans les classes de contexte correspondantes.

En revanche, si aucune classe de contexte existante ne correspond à la nouvelle détection, alors on enregistre à l'étape E25 le vecteur indicateur exogène $\tilde{u}_n$ de la nouvelle détection dans la base de données 10 jusqu'à ce qu'un nombre adapté de vecteurs indicateurs exogènes similaires soient détectés pour former une nouvelle classe de contexte.

A l'étape E26, les vecteurs indicateurs exogènes enregistrés dans la base de données 10 sont utilisés pour mettre à jour les classes de contexte C1, C2, ..., CK et pour réaliser un réapprentissage de la classification lorsque l'adéquation entre les vecteurs indicateurs exogènes et les classes existantes est faible.

On notera que la construction de l'ensemble de classes de contextes lors des étapes E21 à E26 peut être réalisée en utilisant un critère de maximisation de vraisemblance. Dans ce cas, on prend comme hypothèse que le vecteur indicateur exogène $\tilde{u}$ suit une distribution normale à l'intérieur de chaque classe de contexte, et on peut utiliser un critère de maximisation de type EM (Expectation-Maximisation) qui consiste à identifier un mélange de densités gaussiennes (voir par exemple, le document de Dempster et al., « Maximum likelihood from incomplete data via the EM algorithm Journal of the Royal Statistical society, 39(1) :1-38, 1977) ». La méthode EM est un processus itératif qui converge vers un modèle de coefficients de lois gaussiennes identificateurs de classes. Un identificateur de classe permet de calculer l'adéquation entre un vecteur indicateur exogène et la classe et permet donc de déterminer l'appartenance ou la non appartenance d'un vecteur indicateur exogène à une classe existante (voir les étapes E23 et E25). La méthode EM nécessite par ailleurs, d'être initialisée avec un nombre initial de classes.

La Fig. 4 est un organigramme illustrant les étapes pour sélectionner un nombre optimal de classes dans le cadre d'un critère de maximisation du type EM.

A l'étape E31, on fixe un nombre initial $K_0$ de classes de contextes.

A l'étape E32, on utilise un mécanisme de classification (par exemple, EM) pour construire des classes de contextes à partir des détections de vecteurs indicateurs exogènes comme illustré sur la Fig. 3.

A l'étape E33, on applique un critère d'optimisation sur les vecteurs indicateurs exogènes pour sélectionner le nombre adapté de classes de contextes. On calcule un coefficient de vraisemblance selon par exemple, un critère de vraisemblance ou critère bayesien d'information de type BIC (Bayesian Information Criterion). Ce critère correspond ici à une vraisemblance conditionnelle de vecteurs indicateurs exogènes par rapport au nombre de classes. Plus précisément, le critère BIC est défini en fonction de la vraisemblance des vecteurs indicateurs exogènes $L(\hat{u}_{t1},...,\hat{u}_{tN})$, du nombre de classes $K$, et du nombre de détections $N$ selon la formule suivante :

$$BIC = -2 \log\left(L\left(\tilde{u}_{t1}, \ldots, \tilde{u}_{tN}\right)\right) + K \log(N) \; .$$

La méthode consiste alors à minimiser le coefficient BIC. Ce coefficient diminue lorsque la vraisemblance augmente mais tout en étant pénalisé par le nombre K de classes.

Si le coefficient de vraisemblance n'est pas minimal, alors on augmente le nombre de classes de contexte (étape E34) et on recommence les étapes précédentes en bouclant à l'étape E32.

En revanche, si le coefficient de vraisemblance est minimal, alors on arrête l'apprentissage et on a alors, à l'étape E35, une classification assez robuste. Ce coefficient permet ainsi de déterminer le meilleur nombre de classes pour aboutir à une classification optimale. A titre d'exemple, le nombre K de classes est de l'ordre d'une dizaine et le nombre N de détections est de l'ordre d'une centaine.

Une classification robuste permet de créer un modèle de loi stochastique de contextes et par conséquent, de diagnostiquer l'état du banc d'essai et du composant moteur avec une grande précision. En effet, soit $U$ la variable aléatoire de vecteurs indicateurs exogènes et $X$ la variable aléatoire de vecteurs indicateurs endogènes et supposons, qu'à l'instant $t$ la détection de vecteurs indicateurs exogène et endogène est $(\tilde{u}_t, \tilde{x}_t)$, alors l'identification de la classe de contexte est déterminée en calculant la probabilité d'adéquation $A(t)=P(U \approx \tilde{u}_t)$ qui correspond dans ce cas, à la vraisemblance du vecteurs indicateur exogène $\tilde{u}_t$ par rapport au modèle de contextes.

Le détecteur d'anomalie permet alors de calculer la probabilité de risque $R(t)$ et une précision $Pr(t)$ ou une valeur de qualité du risque à l'instant t, selon les formules suivantes :

$$R(t) = 1 - P(X = \tilde{x}_t \, / \, U \approx \tilde{u}_t) \quad \text{et} \quad Pr(t) = tr\left[\text{var}(X \, / \, U \approx \tilde{u}_t\right] \; .$$

Un exemple d'un détecteur d'anomalie pour un moteur d'aéronef est décrit dans la publication de J. Lacaille « Standardized failure signature for a turbofan engine IEEE Aerospace Conference, Big Sky, MT, 2009 ». Ce détecteur d'anomalie est composé de deux blocs. Le premier bloc permet de standardiser et de normaliser les indicateurs en supprimant les dépendances locales vis-à-vis du contexte d'acquisition tout en gérant les relations d'interdépendances stochastiques entre les indicateurs eux-mêmes. Le deuxième bloc consiste à modéliser les indicateurs et à calculer un score d'anomalie ou une probabilité de risque $R(t)$ à partir de la vraisemblance du modèle. Le score peut être obtenu à partir du résidu d'une régression linéaire généralisée. De plus, un estimateur de la variance conditionnelle du modèle est utilisé pour définir la précision $Pr(t)$ ou la fiabilité du risque calculé.

Une anomalie peut être confirmée après plusieurs détections successives et éventuellement après corroboration par diverses sources d'anomalies. Dans le cas où l'anomalie est confirmée, le système de surveillance 1 déclenche ou émet un message d'alerte.

On notera que le score d'anomalie peut aussi être associé à un numéro de classe et éventuellement à un label. La labellisation des anomalies et les dommages des anomalies au sein de chaque classe peuvent être définis par expertise.

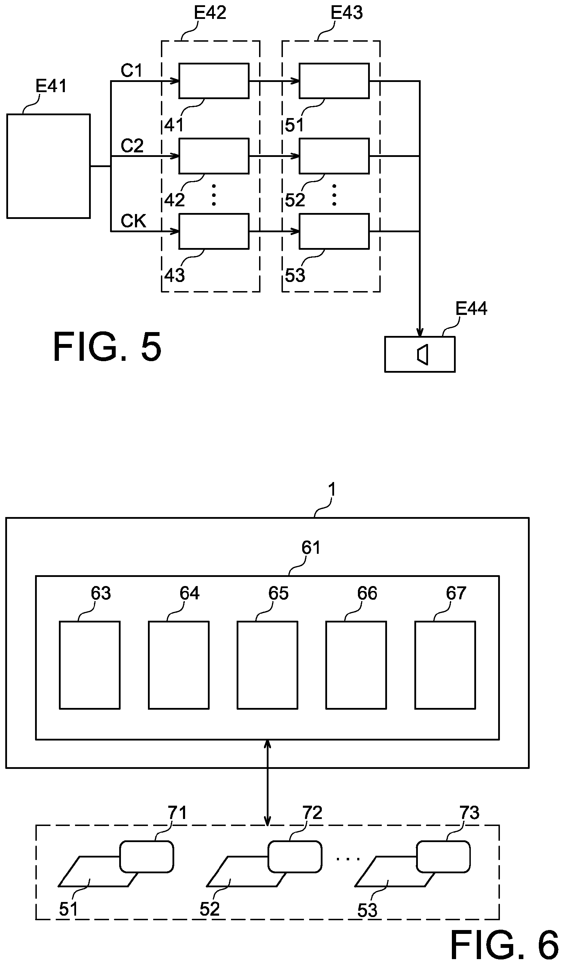

La Fig. 5 est un organigramme illustrant un exemple d'encapsulation de détecteurs d'anomalies dans le système de surveillance 1.

Selon cet exemple, un détecteur d'anomalie est utilisé pour chacune des classes de contexte C1,..., CK.

En effet, l'étape E41 prend en entrée des segments de premières données temporelles à suivre (c'est-à-dire, des paquets de signaux temporels correspondant aux mesures de paramètres endogènes) et à chaque première donnée d'entrée est associée une seconde entrée (c'est-à-dire, des paquets de signaux temporels correspondant aux mesures de paramètres exogènes) décrivant les aspects contextuels du fonctionnement en cours. Les première et seconde données d'entrée à un instant courant t sont transformées en vecteurs indicateurs exogène et endogène $(\tilde{u}_t, \tilde{x}_t)$. Le vecteur indicateur exogène est utilisé pour identifier la classe de contexte ou mode de fonctionnement, comme décrit précédemment.

A l'étape E42, on refait une compression 41-43 plus fine sur les données temporelles à suivre qui sont spécifiques à chacune des classes de contexte identifiée. Ici, la compression est assez simple à faire car les données appartiennent à une même classe et se ressemblent davantage.

A l'étape E43, on utilise un détecteur d'anomalie 51-53 pour chacune des classes de contexte C1,...,CK. Chaque détecteur générique d'anomalie 51-53 produit une information scalaire par tableau de données (comprise entre 0 et 1) qui représente le risque de l'anomalie. Cette sortie est associée à la valeur de qualité chiffrant la pertinence du résultat (compris entre 0 et 1).

A l'étape E44, on émet un message d'alerte au cas où l'anomalie est confirmée. Par exemple, une alerte est déclenchée en cas de dépassement confirmé d'un premier seuil. En outre, une alerte de pronostic d'anomalie peut être déclenchée en cas d'anticipation du dépassement d'un deuxième seuil.

Avantageusement, l'utilisation d'un détecteur d'anomalie dans un banc d'essai 3 permet en plus de valider ce détecteur avant son utilisation sur un moteur embarqué, ce qui facilite et réduit les coûts de la certification du détecteur.

On notera qu'on peut utiliser plusieurs types de détecteurs d'anomalies à basses ou à hautes fréquences d'entrées.

Un premier détecteur d'anomalie implémente un modèle de comportement usuel et réalise une mesure (ou score) de normalité par un calcul de vraisemblance. Ce premier détecteur prend en entrée des segments de données temporelles basses fréquences. Il est utilisé pour détecter des comportements anormaux des vecteurs indicateurs endogènes selon les classes de contexte détectant ainsi les fonctionnements anormaux du banc d'essai 3 et du composant moteur 5.

Un deuxième détecteur d'anomalie implémente un modèle de détection d'endommagement de roulements. Il utilise des segments temporels de données haute fréquence (tachymètres et accéléromètres) synchrones qui peuvent être stockés dans des fichiers. A l'issue du traitement de ces fichiers, le deuxième détecteur génère une probabilité d'anomalie pour chaque roulement ainsi qu'une signature détaillée par roulement.

Un troisième détecteur d'anomalie implémente un modèle de détection d'événements fugaces. Ce détecteur analyse les données vibratoires qui sont acquises par segment sachant que la fréquence de réponse est inférieure à une réponse par segment. Un message d'alerte est émis quand un événement fugace confirmé est détecté. Une autre alerte d'identification peut être émise si la détection peut conduire à une information plus précise sur l'origine de l'événement détecté.

La Fig. 6 illustre de manière schématique l'encapsulation de détecteurs d'anomalies dans le système de surveillance.

Le système de surveillance 1 comporte des moyens de supervision 61 pour encapsuler les détecteurs d'anomalie 51, 52, 53 et pour distribuer les données et surveiller le comportement de chaque détecteur d'anomalie. Ces moyens de supervision 61 comportent des moyens de gestion 63, des moyens de distribution de données 64, des moyens de paramétrage 65, des moyens de communication 66, et des moyens de visualisation 67. Les moyens de gestion 63 sont configurés pour lancer les détecteurs d'anomalie 51, 52, 53 et pour gérer des instances 71, 72, 73 correspondant à des choix de paramétrage et de calibrage de chacun de ces détecteurs d'anomalie. Les moyens de distribution de données 64 sont configurés pour procurer et préparer les données d'entrée pour chacun des détecteurs d'anomalie. Les moyens de paramétrage 65 sont configurés pour régler les paramètres des instances. Les moyens de communication 66 sont configurés pour recevoir, trier, sélectionner et lire les messages de sortie de chacun des détecteurs d'anomalie. Les moyens de visualisation 67 sont configurés pour afficher les résultats.

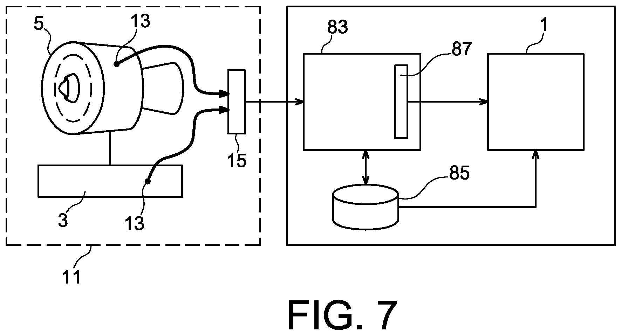

La Fig. 7 illustre de manière schématique un système de gestion du banc d'essai d'un composant moteur, selon l'invention.

Le système de gestion 81 comporte un système de contrôle 83 connecté au banc d'essai 3 d'un composant moteur 5 et un système de surveillance 1. Le système de contrôle 83 est configuré pour contrôler le banc d'essai 3 et pour enregistrer les données issues du banc d'essai 3 et du composant moteur 5 dans des moyens de stockage 85. Par ailleurs, le système de surveillance 1 est connecté à l'ensemble 11 banc d'essai 3 et composant moteur 5 par l'intermédiaire du système de contrôle 83 et via un bus de données 87 qui lui transmet les données issues de l'ensemble 11 banc d'essai 3 et composant moteur 5. Cette configuration permet de ne pas perturber le fonctionnement du banc d'essai.

A titre exemple, le système de contrôle 83 peut être déployé dans un premier ordinateur et le système de surveillance 1 dans un second ordinateur déporté par rapport au premier.

L'invention vise aussi un produit de programmes d'ordinateur, susceptible d'être mis en oeuvre dans les différents éléments du système de surveillance, ces programmes comportant des instructions de code adaptées à la mise en oeuvre d'un procédé selon l'invention telle que décrite ci-dessus.

On notera que les programmes d'ordinateurs peuvent comprendre les variables ou paramètres suivants :

- des paramètres décrivant les noms des mesures à lire en entrée, leur fréquence d'acquisition, et la taille des mémoires tampons (durée des segments ou paquets de données et délai entre deux paquets) ;
- un paramètre de « confirmation » précisant le nombre de tests successifs à effectuer avant d'émettre une alerte ;
- un paramètre de seuil précisant à partir de quelle valeur d'anomalie confirmée une alerte peut être émise ;
- un paramètre de confiance précisant le seuil minimum de confiance moyenne sur les observations servant à la confirmation pour émettre une alerte ; et
- un paramètre « horizon » précisant si une anticipation de dégradation doit être étudiée et à quel horizon.

**Revendications**

1. Système auto-adaptatif de surveillance d'un banc d'essai d'au moins un composant d'un moteur d'aéronef, **caractérisé en ce qu'**il comporte :

   - des moyens d'acquisition (7) pour acquérir à des instants successifs des paquets de signaux temporels correspondants à des mesures de paramètres endogènes et exogènes spécifiques à l'ensemble (11) banc d'essai (3) et composant moteur (5),
   - des moyens de traitement (9) pour construire à chaque instant desdits instants successifs et à partir des paquets de signaux temporels antérieurs audit instant un vecteur indicateur endogène et un vecteur indicateur exogène associé, lesdits vecteurs indicateurs endogène et exogène étant utilisés pour automatiquement identifier les contextes et pour détecter des anomalies en fonction du contexte,
   - des moyens de traitement (9) pour identifier de manière automatique et non supervisée une classe de contexte pour ledit vecteur indicateur exogène, et
   - des moyens de traitement (9) pour calculer en utilisant au moins un détecteur d'anomalie une probabilité de risque dudit vecteur indicateur endogène conditionnée par ladite classe de contexte identifiée pour ledit vecteur indicateur exogène associé afin de diagnostiquer l'état dudit ensemble (11) banc d'essai et composant moteur.

2. Système selon la revendication 1, **caractérisé en ce qu'**il comporte :

   - des moyens de traitement (9) pour construire lors d'une phase d'apprentissage un ensemble de classes de contextes à partir d'une suite de vecteurs indicateurs exogènes initiaux, et
   - des moyens de traitement (9) pour mettre à jour lors d'une phase d'exécution ledit ensemble de classes de contextes à partir de nouvelles entrées de vecteurs indicateurs exogènes.

3. Système selon la revendication 2, **caractérisé en ce que** les moyens de traitement (9) sont configurés pour mettre à jour ledit ensemble de classes de contextes en vérifiant si une nouvelle détection d'un vecteur indicateur exogène appartient à une classe de contexte déjà construite, et en enregistrant le vecteur indicateur exogène de la nouvelle détection dans une base de données (10) si aucune classe de contexte ne correspond à la nouvelle détection jusqu'à ce qu'un nombre adapté de vecteurs indicateurs exogènes similaires soient détectés pour former une nouvelle classe de contexte.

4. Système selon la revendication 2 ou 3, **caractérisé en ce que** les moyens de traitement (9) sont configurés pour mettre à jour ledit ensemble de classes de contextes en vérifiant si des nouvelles détections de vecteurs indicateurs exogènes appartiennent à des classes de contexte déjà construites et en enregistrant au moins une partie desdites nouvelles détections dans les classes de contexte correspondantes.

5. Système selon l'une quelconque des revendications 2 à 4, **caractérisé en ce que** les moyens de traitement (9) sont configurés pour identifier la classe de contexte d'un vecteur indicateur exogène en calculant une valeur d'adéquation dudit vecteur indicateur exogène par rapport à chacune des classes de contextes.

6. Système selon l'une quelconque des revendications 2 à 5, **caractérisé en ce que** les moyens de traitement (9) sont configurés pour construire ledit ensemble de classes de contextes en utilisant un critère de maximisation de vraisemblance.

7. Système selon l'une quelconque des revendications 2 à 6, **caractérisé en ce que** les moyens de traitement (9) sont configurés pour sélectionner un nombre adapté de classes de contextes selon un critère d'optimisation appliqué sur les vecteurs indicateurs exogènes.

8. Système selon l'une quelconque des revendications 1 à 7, **caractérisé en ce qu'**il comporte :

   - des mémoires tampons (21a-21h) pour buffériser pour chacun des paramètres endogènes ou exogènes au moins un paquet de signaux temporels antérieurs audit instant,
   - des moyens de traitements (9) pour lisser chacun desdits paquets de signaux temporels selon au moins une échelle pour former des courbes représentatives desdits paquets,
   - des moyens de traitements (9) pour ré-échantillonner lesdites courbes représentatives, et
   - des moyens de traitements (9) pour comprimer lesdites courbes ré-échantillonnées permettant de construire ledit vecteur indicateur endogène ou exogène.

9. Système selon l'une quelconque des revendications 1 à 8, **caractérisé en ce que** les moyens de traitements (9) sont configurés pour calculer une valeur de qualité de ladite probabilité de risque.

10. Système selon l'une quelconque des revendications 1 à 9, **caractérisé en ce que** le détecteur d'anomalie implémente un modèle de comportement usuel et réalise une mesure de normalité par un calcul de vraisemblance.

11. Système selon l'une quelconque des revendications 1 à 10, **caractérisé en ce que** le détecteur d'anomalie implémente un modèle de détection d'endommagement de roulements.

12. Système selon l'une quelconque des revendications 1 à 11, **caractérisé en ce que** le détecteur d'anomalie implémente un modèle de détection d'événements fugaces.

13. Système selon l'une quelconque des revendications 1 à 12, **caractérisé en ce qu'**il comporte des moyens de supervision (61) dans lesquels sont encapsulés lesdits détecteurs d'anomalie (51, 52, 53), lesdits moyens de supervision étant configurés pour lancer lesdits détecteurs d'anomalie, pour procurer des données d'entrée pour chacun desdits détecteurs d'anomalie, pour recevoir des messages de sortie de chacun desdits détecteurs d'anomalie, et pour gérer des instances correspondant à des choix de paramétrage et de calibrage de chacun desdits détecteurs d'anomalie.

14. Système de gestion comportant un système de contrôle connecté à un banc d'essai d'un moteur, le système de contrôle (83) étant configuré pour contrôler le banc d'essai (3) et pour enregistrer des données issues du banc d'essai et d'au moins un composant d'un moteur (5) dans des moyens de stockage (85), **caractérisé en ce qu'**il comporte un système de surveillance (1) selon l'une quelconque des revendications précédentes, ledit système de surveillance étant connecté au banc d'essai par l'intermédiaire du système de contrôle qui lui transmet lesdites données issues de l'ensemble banc d'essai et composant moteur.

15. Procédé auto-adaptatif de surveillance d'un banc d'essai d'au moins un composant d'un moteur d'aéronef, **caractérisé en ce qu'**il comporte les étapes suivantes :

   - acquérir à des instants successifs des paquets de signaux temporels correspondants à des mesures de paramètres endogènes et exogènes spécifiques à l'ensemble banc d'essai et composant moteur,
   - construire à chaque instant desdits instants successifs et à partir des paquets de signaux temporels antérieurs audit instant un vecteur indicateur endogène et un vecteur indicateur exogène associé, lesdits vecteurs indicateurs endogène et exogène étant utilisés pour automatiquement identifier les contextes et pour détecter des anomalies en fonction du contexte,

- identifier de manière automatique et non supervisée une classe de contexte pour ledit vecteur indicateur exogène, et

- calculer en utilisant au moins un détecteur d'anomalie une probabilité de risque dudit vecteur indicateur endogène conditionnée par ladite classe de contexte identifiée pour ledit vecteur indicateur exogène associé afin de diagnostiquer l'état dudit ensemble banc d'essai et composant moteur.

16. Programme d'ordinateur comportant des instructions de code pour la mise en oeuvre du procédé selon la revendication 15 lorsqu'il est exécuté par ordinateur.

**Patentansprüche**

1. Selbstanpassendes System zur Überwachung eines Prüfstandes von wenigstens einer Komponente eines Flugzeugtriebwerks, **dadurch gekennzeichnet, dass** es umfasst:

- Erfassungsmittel (7), um zu aufeinanderfolgenden Zeitpunkten Zeitsignalpakete zu erfassen, die endogenen und exogenen Parametermessungen entsprechen, welche für die Anordnung (11) aus Prüfstand (3) und Triebwerkskomponente (5) spezifisch sind,

- Verarbeitungsmittel (9), um zu jedem Zeitpunkt der aufeinanderfolgenden Zeitpunkte und aus den Zeitsignalpaketen vor dem Zeitpunkt einen endogenen Indikatorvektor und einen zugeordneten exogenen Indikatorvektor zu konstruieren, wobei die endogenen und exogenen Indikatorvektoren verwendet werden, um die Kontexte automatisch zu identifizieren und um Anomalien in Abhängigkeit von dem Kontext zu erfassen,

- Verarbeitungsmittel (9) zum automatischen und unüberwachten Erkennen einer Kontextklasse für den exogenen Indikatorvektor, und

- Verarbeitungsmittel (9), um unter Verwendung wenigstens eines Anomaliedetektors eine Risikowahrscheinlichkeit des endogenen Indikatorvektors, der durch die Kontextklasse, welche für den zugeordneten exogenen Indikatorvektor identifiziert wurde, konditioniert ist, zu berechnen, um den Zustand der Anordnung (11) aus Prüfstand und Triebwerkskomponente zu diagnostizieren.

2. System nach Anspruch 1, **dadurch gekennzeichnet, dass** es umfasst:

- Verarbeitungsmittel (9), um während einer Lernphase einen Satz von Kontextklassen aus einer Reihe von exogenen Ausgangsindikatorvektoren zu erstellen, und

- Verarbeitungsmittel (9), um während einer Ausführungsphase den Satz von Kontextklassen anhand von neuen Eingaben von exogenen Indikatorvektoren zu aktualisieren.

3. System nach Anspruch 2, **dadurch gekennzeichnet, dass** die Verarbeitungsmittel (9) dazu ausgelegt sind, den Satz von Kontextklassen zu aktualisieren, indem geprüft wird, ob eine neue Erfassung eines exogenen Indikatorvektors zu einer bereits erstellten Kontextklasse gehört, und indem der exogene Indikatorvektor der neuen Erfassung in einer Datenbank (10) gespeichert wird, wenn keine Kontextklasse der neuen Erfassung entspricht, bis eine geeignete Anzahl von ähnlichen exogenen Indikatorvektoren erfasst wird, um eine neue Kontextklasse zu bilden.

4. System nach Anspruch 2 oder 3, **dadurch gekennzeichnet, dass** die Verarbeitungsmittel (9) dazu ausgelegt sind, den Satz von Kontextklassen zu aktualisieren, indem geprüft wird, ob neue Erfassungen von exogenen Indikatorvektoren zu bereits erstellten Kontextklassen gehören und indem wenigstens ein Teil der neuen Erfassungen in den entsprechenden Kontextklassen gespeichert wird.

5. System nach einem der Ansprüche 2 bis 4, **dadurch gekennzeichnet, dass** die Verarbeitungsmittel (9) dazu ausgelegt sind, die Kontextklasse eines exogenen Indikatorvektors durch Berechnen eines Angemessenheitswertes des exogenen Indikatorvektors in Bezug auf jede der Kontextklassen zu identifizieren.

6. System nach einem der Ansprüche 2 bis 5, **dadurch gekennzeichnet, dass** die Verarbeitungsmittel (9) dazu ausgelegt sind, den Satz von Kontextklassen unter Verwendung eines Wahrscheinlichkeits-Maximierungskriteriums zu erstellen.

7. System nach einem der Ansprüche 2 bis 6, **dadurch gekennzeichnet, dass** die Verarbeitungsmittel (9) dazu ausgelegt sind, eine geeignete Anzahl von Kontextklassen gemäß einem Optimierungskriterium auszuwählen, das auf die exogenen Indikatorvektoren angewendet wird.

8. System nach einem der Ansprüche 1 bis 7, **dadurch gekennzeichnet, dass** es umfasst:

   - Pufferspeicher (21a-21h), um für einen jeden der endogenen oder exogenen Parameter wenigstens ein Zeitsignalpaket vor dem Zeitpunkt zu puffern,
   - Verarbeitungsmittel (9) zum Glätten eines jeden der Zeitsignalpakete gemäß wenigstens einer Skala, um für die Pakete repräsentative Kurven zu bilden,
   - Verarbeitungsmittel (9) zum erneuten Abtasten der repräsentativen Kurven und
   - Verarbeitungsmittel (9) zum Komprimieren der erneut abgetasteten Kurven, das ermöglicht, den endogenen oder exogenen Indikatorvektor zu konstruieren.

9. System nach einem der Ansprüche 1 bis 8, **dadurch gekennzeichnet, dass** die Verarbeitungsmittel (9) dazu ausgelegt sind, einen Qualitätswert der Risikowahrscheinlichkeit zu berechnen.

10. System nach einem der Ansprüche 1 bis 9, **dadurch gekennzeichnet, dass** der Anomaliedetektor ein gewöhnliches Verhaltensmodell implementiert und eine Normalitätsmessung durch eine Wahrscheinlichkeitsberechnung durchführt.

11. System nach einem der Ansprüche 1 bis 10, **dadurch gekennzeichnet, dass** der Anomaliedetektor ein Modell zur Erfassung einer Lagerbeschädigung implementiert.

12. System nach einem der Ansprüche 1 bis 11, **dadurch gekennzeichnet, dass** der Anomaliedetektor ein Modell zur Erfassung flüchtiger Ereignisse implementiert.

13. System nach einem der Ansprüche 1 bis 12, **dadurch gekennzeichnet, dass** es Überwachungsmittel (61) umfasst, in die die Anomaliedetektoren (51, 52, 53) eingekapselt sind, wobei die Überwachungsmittel dazu ausgelegt sind, die Anomaliedetektoren zu starten, Eingangsdaten für jeden der Anomaliedetektoren bereitzustellen, Ausgangsnachrichten von jedem der Anomaliedetektoren zu erhalten und Instanzen zu verwalten, die Parametereinstellungs- und Kalibrierungsauswahlen eines jeden der Anomaliedetektoren entsprechen.

14. Verwaltungssystem, das ein Steuersystem umfasst, welches mit einem Prüfstand eines Triebwerks verbunden ist, wobei das Steuersystem (83) dazu ausgelegt ist, den Prüfstand (3) zu steuern und Daten aus dem Prüfstand und von wenigstens einer Komponente eines Triebwerks (5) in Speichermitteln (85) zu speichern, **dadurch gekennzeichnet, dass** es ein Überwachungssystem (1) nach einem der vorhergehenden Ansprüche umfasst, wobei das Überwachungssystem über das Steuersystem, das ihm die Daten aus der Anordnung aus Prüfstand und Triebwerkskomponente übermittelt, mit dem Prüfstand verbunden ist.

15. Selbstanpassendes Verfahren zur Überwachung eines Prüfstandes von wenigstens einer Komponente eines Flugzeugtriebwerks, **dadurch gekennzeichnet, dass** es die folgenden Schritte umfasst:

   - Erfassen, zu aufeinanderfolgenden Zeitpunkten, von Zeitsignalpaketen, die endogenen und exogenen Parametermessungen entsprechen, welche für die Anordnung aus Prüfstand und Triebwerkskomponente spezifisch sind,
   - Konstruieren eines endogenen Indikatorvektors und eines zugeordneten exogenen Indikatorvektors zu jedem Zeitpunkt der aufeinanderfolgenden Zeitpunkte und aus den Zeitsignalpaketen vor dem Zeitpunkt, wobei die endogenen und exogenen Indikatorvektoren verwendet werden, um die Kontexte automatisch zu identifizieren und um Anomalien in Abhängigkeit von dem Kontext zu erfassen,
   - automatisches und unüberwachtes Erkennen einer Kontextklasse für den exogenen Indikatorvektor, und
   - Berechnen einer Risikowahrscheinlichkeit des endogenen Indikatorvektors, der durch die Kontextklasse, welche für den zugeordneten exogenen Indikatorvektor identifiziert wurde, konditioniert ist, unter Verwendung wenigstens eines Anomaliedetektors, um den Zustand der Anordnung aus Prüfstand und Triebwerkskomponente zu diagnostizieren.

16. Computerprogramm, das Codeanweisungen zum Druchführen des Verfahrens nach Anspruch 15 umfasst, wenn es von einem Computer ausgeführt wird.

**EP 2 627 982 B1**

**Claims**

1. Self-adaptive monitoring system for a test bench for at least one engine component, **characterised in that** it comprises:

- acquisition means (7) to acquire time signal packets corresponding to measurements of endogenic and exogenic parameters specific to the combination (11) of the test bench (3) and the engine component (5), at successive instants,
- processing means (9) to construct an endogenic indicator vector and an associated exogenic indicator vector at each instant of said successive instants, using time signal packets earlier than said instant, said endogenic and exogenic indicator vectors being used to identify contexts automatically and to detect anomalies as a function of the context,
- processing means (9) to identify automatically without supervision a context class for said exogenic indicator vector, and
- processing means (9) to calculate a risk probability of said endogenic indicator vector conditioned by said identified context class for said associated exogenic indicator vector using at least one anomaly detector, in order to produce a diagnostic of the state of said test bench and engine component combination (11).

2. System according to claim 1, **characterised in that** it comprises:

- processing means (9) to construct a set of context classes starting from a sequence of initial exogenic indicator vectors during a learning phase, and
- processing means (9) to update said set of context classes during an execution phase, starting from new exogenic indicator vector inputs.

3. System according to claim 2, **characterised in that** the processing means (9) are configured to update said set of context classes by checking if a new detection of an exogenic indicator vector belongs to a previously constructed context class, and recording the exogenic indicator vector of the new detection in a database (10) if there is no context class that corresponds to the new detection until an appropriate number of similar exogenic indicator vectors have been detected to form a new context class.

4. System according to claim 2 or 3, **characterised in that** the processing means (9) are configured to update said set of context classes, by verifying if new detections of exogenic indicator vectors belong to previously constructed context classes and recording at least some of said new detections in the corresponding context classes.

5. System according to any one of claims 2 to 4, **characterised in that** the processing means (9) are configured to identify the context class of an exogenic indicator vector by calculating a match value of said exogenic indicator vector relative to each context class.

6. System according to any one of claims 2 to 5, **characterised in that** the processing means (9) are configured to construct said set of context classes using a likelihood maximisation criterion.

7. System according to any one of claims 2 to 6, **characterised in that** the processing means (9) are configured to select an appropriate number of context classes based on an optimisation criterion applied to the exogenic indicator vectors.

8. System according to any one of claims 1 to 7, **characterised in that** it comprises:

- buffer memories (21a-21h) to buffer at least one packet of time signals earlier than said instant, for each endogenic or exogenic parameter,
- processing means (9) to smooth each of said time signal packets according to at least one scale to form curves representative of said packets,
- processing means (9) to re-sample said representative curves, and
- processing means (9) to compress said re-sampled curves to construct said endogenic or exogenic indicator vector.

9. System according to any one of claims 1 to 8, **characterised in that** the processing means (9) are configured to calculate a quality value of said risk probability.

**10.** System according to any one of claims 1 to 9, **characterised in that** anomaly detector implements a normal behaviour model and generates a normality measurement by a likelihood calculation.

**11.** System according to any one of claims 1 to 10, **characterised in that** the anomaly detector implements a bearing damage detection model.

**12.** System according to any one of claims 1 to 11, **characterised in that** the anomaly detector implements an intermittent events detection model.

**13.** System according to any one of claims 1 to 12, **characterised in that** it comprises supervision means (61) in which said anomaly detectors (51, 52, 53) are encapsulated, said supervision means being configured to start said anomaly detectors, to procure input data for each of said anomaly detectors, to receive output messages from each of said anomaly detectors and to manage instances corresponding to parameter settings and calibration choices for each of said anomaly detectors.

**14.** Management system comprising a control system connected to an engine test bench, the control system (83) being configured to control the test bench (3) and to record data output from the test bench and at least one component of an engine(5) in storage means (85), **characterised in that** it comprises a monitoring system (1) according to any one of the previous claims, said monitoring system being connected to the test bench through the control system that sends said data to it output from the test bench and engine component combination.

**15.** Self-adaptive method of monitoring a test bench for at least one engine component, **characterised in that** it comprises the following steps:

- acquire time signal packets at successive instants corresponding to endogenic and exogenic parameter measurements specific to the test bench and engine component combination,
- at each instant of said successive instants, use packets of time signals earlier than said instant to construct an endogenic indicator vector and an associated exogenic indicator vector, said endogenic and exogenic indicator vectors being used to identify contexts automatically and to detect anomalies as a function of the context,
- identify a context class for said exogenic indicator vector, and
- use at least one anomaly detector to calculate a risk probability of said endogenic indicator vector conditioned by said identified context class for said associated exogenic indicator vector in order to produce a diagnostic of the state of said test bench and engine component combination.

**16.** Computer program comprising code instructions for implementation of the method according to claim 15 when it is executed by a computer.

# FIG. 1

EP 2 627 982 B1

FIG. 2

E21

$\{\tilde{u}_{t1}\cdots\tilde{u}_{tN}\}$

$\boxed{C1}\ \boxed{C2}\ \cdots\ \boxed{CK_0}$

$\tilde{u}_n$

$\tilde{u}_n \in Cj?$    E22
$j=1,\ldots K$

E25

$\tilde{u}_n \notin Cj$

E23

$\tilde{u}_n \in Cj$

E24

E26

$\boxed{C1}\ \cdots\ \boxed{CK}$

10

# FIG. 3

E31

$K_0$

E32

EM

E33

BIC

E34

$K\nearrow$

E35

$C1,\ldots CK$

# FIG. 4

FIG. 5

FIG. 6

# FIG. 7

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 4821217 A
- EP 1195593 A

**Littérature non-brevet citée dans la description**

- **J. LACAILLE.** Validation of health monitoring algorithms for civil aircraft engines, IEEE Aerospace Conference. Big Sky, 2010
- **DEMPSTER et al.** *Maximum likelihood from incomplete data via the EM algorithm Journal of the Royal Statistical society,* 1977, vol. 39 (1), 1-38
- **J. LACAILLE.** Standardized failure signature for a turbofan engine IEEE Aerospace Conference. Big Sky, 2009